# EUROPEAN PATENT APPLICATION

(11) **EP 4 012 650 A1**
(43) Date of publication of application: **15.06.2022**
(21) Application number: 20213772.5
(22) Date of filing: 14.12.2020
(51) Int. Cl.: G06T 7/00, G06T 7/11, G06T 7/149

(54) **SEGMENTATION OF ANATOMICAL STRUCTURE IN IMAGE**

(71) Applicant: Koninklijke Philips N.V., 5656 AG Eindhoven (NL)
(72) Inventor: VON BERG, Jens, 5656 AE Eindhoven (NL); LORENZ, Cristian, 5656 AE Eindhoven (NL); KLINDER, Tobias, 5656 AE Eindhoven (NL); BÜRGER, Christian, 5656 AE Eindhoven (NL); FRANZ, Astrid Ruth, 5656 AE Eindhoven (NL); LENGA, Matthias, 5656 AE Eindhoven (NL)
(74) Representative: Philips Intellectual Property & Standards

(57) **Abstract**

The present invention relates to a method (resp. a device and a computer-program product) for segmenting an anatomical structure having at least two non-overlapping parts represented in an image. The method comprises obtaining (11) a surface mesh model of the anatomical structure, which comprises sub-models for each of the non-overlapping parts and a plurality of connectors. Each connector connects a point in a sub-model to another point in another sub-model. The method comprises determining (12) at least three anatomical landmarks in the image, and adapting (13) the mesh model by repositioning vertices to optimize an objective function. The objective function comprises at least a part representative of a correspondence between the model and the image, a part for preserving the shape of the model and to maintain spacing between the sub-models due to the connectors, and a part for driving distances between points of the model and the detected landmarks toward predetermined values by simulating spring forces.

## Description

### FIELD OF THE INVENTION

The present invention relates to the field of image processing, e.g. for research, medical and/or veterinary imaging applications, and particularly to model-based techniques to segment an anatomical structure in an image. More specifically, the invention relates to a method for segmenting an anatomical structure represented in an image, and related devices, systems and computer-program products.

### BACKGROUND OF THE INVENTION

Methods to segment anatomical structures in images, such as computed tomography (CT), ultrasound (US) and/or magnetic resonance imaging (MRI) images, are well-known in the art. For example, an automatic or semi-automatic segmentation of the spine of a patient in tomographic images is a frequently applied processing step that can serve a variety of diagnostic or other practical purposes, such as to aid in the planning or evaluation of a treatment. The segmentation can, for example, be integrated in interactive and/or fully automated tools to assist in detecting fractures of the spine.

By applying a segmentation, a part of the image can be identified that represents the anatomical structure of interest (e.g. to delineate and/or label the structure in the image), and/or the anatomical structure can be accurately defined based on information extracted from the image in which it is represented, e.g. by constructing a surface model of the structure.

Many different approaches are known in the art, ranging from the very simple, e.g. assigning image pixels or voxels having a value above (or below) a predetermined threshold as part of a specific anatomical structure or structure type (e.g. bone or lung tissue), to quite complicated and involved methods, which may consist of an intricate combination of many different processing steps. Generally, segmentation methods may comprise operations that are directly based on voxel/pixel values (e.g. the aforementioned thresholding example or more adaptive techniques using histogram partitioning), on information from the local (or an extended) neighborhood around each voxel/pixel (e.g. edge detection, texture recognition, morphological feature extraction, region-growing and/or watershed transformations, to name a few), on more globally defined image properties (e.g. using Markov Random Fields or multi-scale methods, to name a few) and/or machine learning algorithms, for which the specific image information that is eventually used by the trained model is not always clearly identifiable (e.g. by training neural networks or other trainable constructs).

Segmentation algorithms may also involve an explicit (or implicit) model of the anatomical structure of interest. Model-based approaches allow to take detailed prior knowledge of the anatomical structure of interest into account, e.g. of its particular shape, its dimensions, the expected voxel/pixel values, a possible specific internal structure and/or texture, and other such properties. Model-based segmentation techniques have proven to be very efficient for a wide variety of simple to complex anatomical structures, such as bone(s), the liver, and the heart.

For example, a cascade of model adaptation steps may start with an approximative positioning and orienting of the model relative to the image, a coarse adaptation, e.g. deforming the model, and ending with a fine-grained adjustment step. Clearly, while a coarse to fine progression of model tuning is commonly applied, the number of intermediate steps can vary from only a few to a quite large number. As an illustrative example, a known method in the art may comprise, first, positioning a (universal) heart model with respect to a volumetric image of the (a specific) heart, then applying multiple affine transformations to components of the model, e.g. the heart chambers, e.g. for each component separately, and finally optimizing a deformable non-rigid transformation. In this, or a similar, approach, the degrees of freedom (broadly interpretable) of a model can be progressively increased to guide the segmentation process to a likely solution of the segmentation problem, e.g. to avoid getting trapped in a local optimal solution that are unrealistic or far removed from the global optimum. A shape-constrained deformable model may, for example, be used as the model of the anatomical structure to be segmented (e.g. the heart). Such model may comprise a three-dimensional surface model, e.g. a triangular mesh, in which, in the final step(s) of deformation fitting, the mesh is locally deformed to match the image, e.g. by allowing nodes of the mesh structure to shift in an iterative process. This process may be constrained by additional considerations, such as requiring the global shape of the model to stay close to a subspace of shapes that accounts for anatomical variability without deviating strongly from a realistic shape.

While this type of segmentation approach can offer a high specificity to the structure(s) of interest and can also achieve quite good segmentation quality, the fitting (or other form of adaptation) of a model of the anatomical structure of interest to the observed image data typically requires many (often computationally intensive) steps, and a heavy investment in designing and tailoring the method for/to the specific structure of interest. It is to be noted that a carefully designed procedure can achieve very good results, but is certainly not straightforward. Given the high degree of flexibility that many models need to be able to account for naturally occurring variability, including variability due to possible pathologic conditions and injuries, great attention to design of the procedure is needed to avoid overfitting and/or unrealistic segmentation results. Furthermore, even if a segmentation procedure is carefully designed to be less prone to errors, the computational complexity and time required to run a typical model-based segmentation as known in the art can remain a substantial drawback.

### SUMMARY OF THE INVENTION

It is an object of embodiments of the present invention to provide in good and efficient means and methods to segment a predetermined anatomical structure of interest in an image, e.g. a medical image.

It is an advantage of embodiments of the present invention that a segmentation approach is provided that requires few steps and/or that has a low computational complexity and/or that can be performed in little time.

It is an advantage of embodiments of the present invention that a flexible (e.g. versatile) model of an anatomical structure of interest can be used in segmentation, without implying a high risk of overfitting and/or obtaining unrealistic segmentation results.

It is an advantage of embodiments of the present invention that a simple and versatile approach is provided to segment an anatomical structure of interest, e.g. which may be applied to a wide range of different structures without requiring extensive redesigning, tailoring and/or finetuning of the segmentation method to the specific anatomy of interest.

It is an advantage of embodiments of the present invention that anatomical and/or physiological parameters, which may be relevant for diagnosis, treatment planning or other applications, can be determined easily from segmentation results provided by embodiments of the present invention. For example, parameters such as dimensions of anatomical features or structures and/or relative positions and/or orientations (e.g. inclination angles etc.) of anatomical features or structures with respect to each other (or with respect to a reference coordinate system) can be directly determined from the segmentation result, e.g. the fitted model. This may be an advantage with respect to methods of segmentation that render less insightful results, such as image-based and/or machine learning-based segmentation techniques, but also with respect to at least some prior art methods of model-based segmentation.

It is also an advantage that easy access to relevant parameters and/or readily interpretable parameters may be useful for analysis of data on an aggregated level, e.g. to facilitate an automatic processing of many images (e.g. of different subjects), e.g. for population screening and/or research purposes.

It is an advantage of embodiments of the present invention that constraints to maintain physical feasibility of a solution, e.g. to avoid self-intersection and/or to preserve distances between points and/or elements of the model used to describe the anatomical structure(s) of interest (and/or easily detectable landmark features in the image) in a realistic range, can be easily, efficiently and/or effectively taken into account. For example, instead of requiring additional processing step to ensure that constraints are met and/or to detect/remove inconsistencies (e.g. detect self-intersection), a model of the anatomical structure(s) to be segmented can, in accordance with embodiments of the present invention, take such considerations into account in an efficient, natural and elegant manner. The latter has the additional advantage of allowing a natural range (e.g. a normal distribution) to be simulated (e.g. encoded) by the model (e.g. avoiding outliers without necessarily strictly excluding extremes), and to allow the fitted model to be readily interpreted in a straightforward manner, e.g. parameters of the model may be directly interpretable by a user and/or may be physiologically and/or anatomically relevant as such. It is to be noted, however, that, even though the aforementioned additional processing steps can be advantageously avoided or reduced, the use of such steps to improve results even further is not necessarily excluded.

For example, where a prior art method may rely on a progression of tuning parameters (or weights or ranges thereof) having a global or coarse effect on fitting/adapting the model to parameters (or weights or ranges thereof) having a more local or fine-grained effect to ensure or improve the physical feasibility or realism of segmentation results, the need for such progression may be advantageously reduced or even avoided by embodiments of the present invention. Thus, as an example, an initial step of positioning and/or affine registering the model without simultaneously deforming the model might be avoidable in accordance with at least some embodiments of the present invention, i.e. such that the complexity of the segmentation can be kept rather low. This low complexity may refer to the computation complexity in use of the method/device/computer-program product and/or to the percentual complexity of an easily understandable underlying algorithm, which may be advantageous in maintaining and/or debugging implementing code and/or hardware.

It is an advantage of embodiments of the present invention that not only a coarse (i.e. global; large-scale) positioning of the model with respect to the image can be easily obtained, while deformation or fine-grained model adjustments can (if desired) be executed simultaneously, but that also the coarse (global; large-scale) orientation can be concomitantly determined/optimized.

For example, by simulating/optimizing a recall force/energy (but not limited to only these force/energy terms) assigned to a distance between points in the model, e.g. vertices of a mesh (without limitation thereto) and image landmarks that can easily be determined in a preprocessing step, the position of the model points can be pulled toward the landmark points (but not limited to finding an optimum at the overlap or superposition thereof; e.g. an offset term may be used to find an optimum near a predetermined non-zero distance). Clearly, if such relation is established between at least two, preferably at least three, point pairs (e.g. three not collinear pairs), the position as well as orientation of the model is pulled toward an optimal solution in the general vicinity (e.g. taking possible other energy/force contributions into account) of the constellation defined by the landmarks.

It is an advantage of embodiments of the present invention that an automatic (or semi-automatic) model-based segmentation of images, e.g. volumetric images, e.g. medical and/or diagnostic images, can be achieved in substantially a single processing step, or more accurately, only two steps (taking a prior step of detecting image landmarks into account as well). For example, while the main processing step may involve iterations or a processing loop, it can be considered as a single optimization or a single iterative updating procedure, i.e. a single step, e.g. the approach does not require the application of substantially different algorithms, cost functions, optimization criteria etc. in a sequence of steps (e.g. in which each step or some steps may involve substantially different algorithms or cost/objective functions to be optimized). Nonetheless, it will be understood by the skilled person that this advantage is not lost or diminished by including additional processing steps, e.g. particularly when these are robust, straightforward and/or not computationally intensive. Therefore, embodiments may certainly (optionally) include additional processing steps, even if a segmentation could be achieved without these additional processing steps, e.g. in cases where such additional processing is deemed useful by the skilled person, for example to further improve the quality of the segmentation results.

It is an advantage of embodiments of the present invention that the provided methods (and/or resp. devices, computer-program products) may be particularly suitable to segment the spine or a part thereof (e.g. a segment comprising at least two vertebrae). Surface (e.g. triangular) mesh(es) may be used to model the shape of separate vertebrae, while the position, relative orientation and distance between the vertebrae can be modeled, in accordance with embodiments, by segment connectors, e.g. line segments or degenerate triangles (without limitation thereto; a line segment represented by a degenerate triangle may be conveniently incorporated in a framework that is specifically adapted and/or optimized for triangular meshes). The skilled person will appreciate that such modeling approach can determine a subject-specific shape of the rigid bony structures (e.g. vertebrae) based on a population-wide generalization thereof (the template mesh as starting point for the segmentation model), while concomitantly accounting for a relatively high flexibility in positioning and orienting of these structures with respect to each other. Furthermore, the connectors advantageously avoid intersection of vertebrae in the model by enforcing (or at least preferring) a non-zero length of the interconnections between the vertebrae. Thus, a flexible spine can be modeled in a stable and robust manner, in which vertebrae are allowed to move with respect to each other to some degree. This approach may avoid, amongst other advantages, that intersection of neighboring meshes need to be managed by separate (e.g. additional) checks or sub-routines.

It is also to be noted that the same advantages as can be achieved for spine segmentation can be readily generalized to different anatomical structures. While the types of anatomical structures that can be modeled efficiently by an approach in accordance with embodiments are not necessarily a-priori limited, the same or a similar approach can be particularly easily envisioned for similar structures, e.g. connected skeletal bones, joints and ligaments. Examples thereof may include the pelvis/hip region (including possibly the femur/s, the sacrum, the lumbar spine or part thereof, the sacroiliac joint, and/or the lumbosacral joint), the thoracic cage or parts thereof, and/or the skull, the facial bones and/or cervical spine (or parts/combinations thereof). Nevertheless, embodiments of the present invention may also be applicable to other types of anatomical structures, e.g. in which a compartment model could be relevant or useful, such as the brain, the liver, the heart, the lungs, the organs in the abdominal cavity, or a part of any of these examples (e.g. a model of part of the gastrointestinal tract), or a combination of any of the these examples (e.g. a combined heart and lungs model).

A device, method, system and/or computer-program product in accordance with embodiments of the present invention achieves the above objective.

In a first aspect, the present invention relates to a method, e.g. a computer-implemented method, for segmenting an anatomical structure represented in an image. The anatomical structure comprises at least two non-overlapping, e.g. disjoint, parts.

The method comprises obtaining a surface mesh model of the anatomical structure to be segmented. The surface mesh model comprises a plurality of sub-models for respectively representing each of the at least two non-overlapping parts, as well as a plurality of connectors. Each connector of the plurality of connectors connects a point in a sub-model to a (proximate) point in another (e.g. adjacent) sub-model of the plurality of sub-models. Preferably, each pair of adjacent sub-models is interconnected (at least one point of one sub-model to at least one point to the other sub-model) by at least one such connector, preferably by at two, or more, e.g. at least three, connectors.

The method comprises determining at least three anatomical landmark features in the image.

The method further comprises adapting the surface mesh model by iteratively repositioning vertices of the surface mesh model ('deforming' the model) to optimize an objective function.

The objective function, e.g. a cost function, an energy function, a goal-based function or equivalent thereof (e.g. the minimum or maximum of the function being reached for a good fit of the adapted model to the image taking further constraints into account, as described below), comprises at least:
a first part representative of a correspondence between the (deformed) surface mesh model and the anatomical structure represented in the image,
a second part for (preferentially) preserving the (overall) shape of the surface mesh model and to maintain spacing between said sub-models as represented (constrained; implied) by said connectors, and
a third part for driving distances between predetermined points of the surface mesh model and detected landmark features toward zero or to other predetermined values (i.e. to a target value or values being zero or non-zero) by simulating a spring force between each of the detected landmark features and at least one of said predetermined points.

In a method in accordance with embodiments of the present invention, the surface mesh model may comprise or consist of vertices, edges connecting said vertices, and triangular faces formed by the edges.

In a method in accordance with embodiments of the present invention, the plurality of connectors may comprise or consist of line segments represented as degenerate triangular faces of the surface mesh model.

In a method in accordance with embodiments of the present invention, determining the at least three anatomical landmark features in the image may comprise evaluating a trained predictive model for each of the anatomical landmark features.

In a method in accordance with embodiments of the present invention, the trained predictive model may comprise a neural network, e.g. a convolutional network, and/or an ensemble model, e.g. a forest model of regression trees. The output of the neural network or the ensemble model (e.g. of the regression trees) may represent a probability of locating the landmark feature under consideration at an input location in the image, e.g. based on a feature vector indicative of the image contents in a local neighborhood of the input location.

In a method in accordance with embodiments of the present invention, the trained predictive models may be applied to obtain a list of candidate locations (e.g. most likely positions; local maxima of said output value indicative of the probability) of each landmark feature to be detected. Determining the at least three anatomical landmarks may further comprise selecting an optimal constellation of the anatomical landmark features by evaluating all combinations of the candidate locations of each landmark. For example, for each landmark feature, a plurality of possible candidate locations may be proposed by the predictive models, and each combination of such candidate locations (forming a constellation; comprising one candidate for each landmark, possibly allowing for the absence of one or more landmarks by including a further candidate indicative of a missing feature) may be evaluated to select the most likely overall combination of candidates.

In a method in accordance with embodiments of the present invention, evaluating the combinations to select the optimal constellation may comprise applying a conditional random field algorithm.

In a method in accordance with embodiments of the present invention, determining the at least three anatomical landmark features in the image may comprise detecting a centerline of one or more bones in the image, and selecting predetermined points on the or each centerline as one or more of said landmark features. The one or more bones may comprise or consist of one or more ribs.

In a method in accordance with embodiments of the present invention, the anatomical structure being segmented may comprise a spine or part thereof, and the at least two non-overlapping parts may comprise at least two separate parts corresponding to different vertebrae, in which each of the sub-models comprises a mesh model of the corresponding vertebral body.

In a method in accordance with embodiments of the present invention, the anatomical landmark features may comprise points on one or more rib centerlines, and/or (bary)centers of process tips of the vertebral bodies and/or of the upper and/or lower vertebral body plates.

In a method in accordance with embodiments of the present invention, the third part of the objective function may comprise, for each vertebral sub-model, modeled spring forces connecting points on that vertebral sub-model to at least two landmarks on rib centerlines of two opposite ribs adjacent to the vertebral body.

In a second aspect, the present invention relates to an image processing device for segmenting an anatomical structure represented in an image. The anatomical structure comprises at least two no-overlapping parts, e.g. disjoint parts. The device comprises an input for receiving the image, and a data storage 32 for at least transiently storing a surface mesh model of the anatomical structure to be segmented. The surface mesh model comprises a plurality of sub-models for respectively representing each of the at least two non-overlapping parts, and a plurality of connectors, in which each connector connects a point in a sub-model to another point in another sub-model of the plurality of sub-models.

The device comprises an anatomical landmark detector to determine at least three anatomical landmark features in the image.

The device further comprises an optimizer for adapting the surface mesh model by iteratively repositioning vertices of the surface mesh model to optimize an objective function. This objective function comprises at least:
a first part representative of a correspondence between the surface mesh model and the anatomical structure represented in the image,
a second part for preserving the shape of the surface mesh model and to maintain spacing between said sub-models as represented by said connectors, and
a third part for driving distances between predetermined points of the surface mesh model and the detected landmark features toward zero or to other predetermined values by simulating a spring force between each of said detected landmark features and at least one of said predetermined points.

The device may also comprise an output for outputting the adapted surface mesh model as a result of the segmentation.

In a third aspect, the present invention relates to a computer-program product comprising computer-executable instructions, which, when executed on a programmable device, performs a method in accordance with embodiments of the first aspect of the present invention.

In a fourth aspect, the present invention relates to an image processing workstation (e.g. a CT or MRI workstation) to process medical (or veterinary) images, comprising a device in accordance with embodiments of the second aspect of the present invention.

In a fifth aspect, the present invention relates to a surface mesh model of an anatomical structure to be segmented for use in a method in accordance with embodiments of the first aspect of the present invention. The surface mesh model comprises a plurality of sub-models for respectively representing at least two non-overlapping parts of the anatomical structure, and a plurality of connectors, in which each connector connects a point in a sub-model to another point in another sub-model of the plurality of sub-models. The surface mesh model further comprises annotation information associated with predetermined points of the surface mesh model, in which the annotation information defines for each of the annotated points one or more predetermined landmark features to be detected in an image, such that the method in accordance with embodiments of the first aspect of the present invention can simulate a spring force between the landmark feature and the associated point when adapting the surface model to segment an image.

The independent and dependent claims describe specific and preferred features of the invention. Features of the dependent claims can be combined with features of the independent claims and with features of other dependent claims as deemed appropriate, and not necessarily only as explicitly stated in the claims.

### BRIEF DESCRIPTION OF THE DRAWINGS

FIG. 1 shows a method in accordance with embodiments of the present invention.
FIG. 2 illustrates a part of a mesh model for use in a method in accordance with embodiments of the present invention.
FIG. 3 shows a mesh model for use in a method in accordance with embodiments of the present invention.
FIG. 4 illustrates a transverse slice of a mesh model, superimposed on a (corresponding cross-sectional slice of the) image to be segmented, on which modeled spring forces between the model and image landmarks are furthermore indicated, in accordance with embodiments of the present invention.
FIG. 5 illustrates a device in accordance with embodiments of the present invention.
FIG. 6 shows an illustrative result of a segmentation of a spine, as obtained by a method in accordance with embodiments of the present invention.

The drawings are schematic and not limiting. Elements in the drawings are not necessarily represented on scale. The present invention is not necessarily limited to the specific embodiments of the present invention as shown in the drawings.

### DETAILED DESCRIPTION OF EMBODIMENTS

In a first aspect, the present invention relates to a method for segmenting an anatomical structure represented in an image, e.g. to identify, delineate and/or label the anatomical structure (and/or parts thereof) in the image and/or to obtain an accurate definition of the shape of the anatomical structure based on the image. Particularly, the method is intended to segment an anatomical structure that comprises at least two non-overlapping parts, preferably at least two disjoint parts.

The method may be a computer-implemented method, e.g. an automatic or semi-automatic procedure executed by a suitable processor, e.g. on a computer.

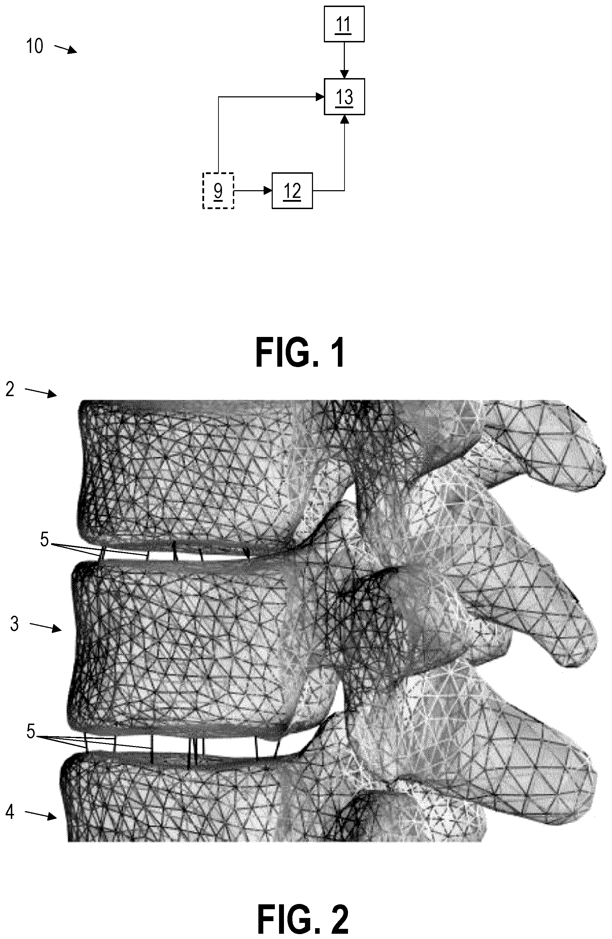

FIG 1 shows an illustrative method 10 in accordance with embodiments of the present invention.

The method 10 may comprise obtaining 9 the image in which the anatomical structure is depicted, e.g. by receiving the image from a data storage, a (e.g. diagnostic or medical) scanner device and/or a processing system associated with such scanner device, or by directly interacting with such (e.g. by controlling the) scanner device to acquire the image. The image may be a tomographic image, e.g. a volumetric (e.g. 3D) image. For example, the image may be a computed tomography (CT) image, a magnetic resonance imaging (MRI) image, an ultrasound (US) image, a nuclear medicine imaging (e.g. SPECT,PET) image, or another image of a modality used in diagnostic, medical or veterinary imaging.

The method 10 comprises obtaining 11 a surface mesh model of the anatomical structure to be segmented, e.g. of an approximate shape of the anatomical structure. In other words, the surface mesh model may be a template mesh model, e.g. may be generally similar in shape and topology to the anatomical structure, while typically requiring deformation and tailoring of dimensions, orientations and position coordinates to describe the anatomical structure depicted by the image in an accurate manner.

The surface mesh model may be received as an input from a storage device or medium. For example, the method may be implemented on (executed by) a computing device, and a user may select a suitable surface mesh model from a plurality of such models available on a data storage device or medium. Clearly, the method may alternatively be specifically tailored for one specific type of anatomical structure, and therefore does not necessarily allow the surface mesh model to be selected from a plurality of available choices. The surface mesh model may even be integrated in code implemented the method, or hardwired in a device for performing the method. Furthermore, in embodiments where a selection between different models is possible, this selection does not necessarily rely on a user input, e.g. may also be executed by an automatic detection algorithm for determining a suitable model, e.g. based on metadata associated with the image or directly by recognizing image features.

The surface mesh may comprise a plurality of vertices, e.g. points in a three-dimensional space, which are associated in groups to form surface elements ("faces"), e.g. triangles or other polygons. Each vertex can be associated to a plurality of surface elements, e.g. such that different surface elements abut against each other (e.g. share an edge between two shared vertices). Thus, together, the surface elements may form a contiguous surface. However, since the anatomical structure comprises at least two non-overlapping parts, the surface elements may form a corresponding plurality of non-overlapping contiguous surfaces defined by corresponding sets of faces.

This may correspond to what is generally considered by the term "surface mesh model", i.e. a collection of vertices, edges that connect vertices, and polygon faces formed by their bounding edges, even though it will be understood that the same structure might be described by a different but analogous parametrization in alternative embodiments of the present invention. For example, in line with the description provided hereinabove, the surface mesh model might be constructed or constructable by, and subsequently described and/or stored as, a Delaunay triangulation of points on the surface of a template of the anatomical structure, but might also be, equivalently, described by the dual Voronoi graph thereof. Furthermore, other equivalent descriptions of, in principle, the same mesh model are not necessarily excluded either.

The surface mesh model may form a deformable surface mesh model of repositionable vertices. The surface mesh model thus represents the surfaces of the anatomical structure. The surfaces of the anatomical structure may include exterior surfaces and/or interior surfaces, e.g. delineating discernable sub-structures of the anatomical structure. The anatomical structure may comprise a plurality of disjoint parts, each having its own associated external (and possible also internal) surface(s) in the surface mesh model. The method may segment the anatomical structure of interest in the image by adapting the deformable surface mesh model, e.g. by repositioning the vertices until a good correspondence between the deformed model and the image content is achieved.

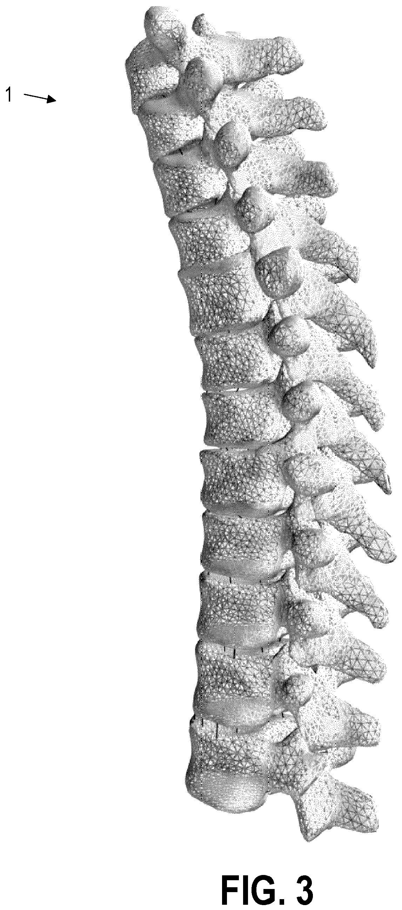

FIG 3 shows an illustrative surface mesh model 1 that can be used as a deformable model for segmenting an anatomical structure, in this specific example being a human spine, in a method 10 in accordance with embodiments of the present invention. Particularly, without limitation thereto, the surface mesh model 1 is a triangulated surface model of the spine. Given the high resolution, i.e. large number of faces and high density of vertices, of this illustrative model, a section thereof is shown enlarged in FIG 2.

The surface mesh model comprises sub-models 2,3,4 (...) that respectively describe each of the at least two non-overlapping parts (or disjoint parts), and a plurality of connectors 5, in which each connector connects a point in a sub-model to a proximate point in another sub-model. The in this manner connected sub-models correspond to adjacent (e.g. neighboring) non-overlapping parts of the anatomical structure, e.g. the connectors establish, generally, a spatial relationship between the otherwise separable modeled parts. In the example shown in FIG 2 and 3, the connectors 5 may connect points (e.g. vertices) of neighboring vertebral body plates.

Each sub-model may form a separate surface mesh model of the corresponding part on its own. The non-overlapping parts, described by corresponding sub-models, may relate to distinct body parts or anatomical (sub)structures, but may also relate to separate compartments or visibly separable regions of a same body part or organ. For example, the non-overlapping parts may correspond to different bones in the body, while the anatomical structure to be segmented may correspond to a joint (or plurality of joints) formed by these different bones. As a specific example, for which embodiments of the present invention may be particularly suitable, the anatomical structure may be the spine (or part thereof), and the parts may be individual vertebrae. Another type of example may relate to an organ or a group of (generally adjacent) organs, in which the parts are distinguishable from each other (e.g. particularly visible in images of the same modality type as considered for the specific application). Some examples may include different parts of the gastrointestinal tract, lobes of the liver, lobes of the lungs, chamber and antechambers of the heart, parts of the brain (e.g. the cerebral lobes, the cerebellum, and the brainstem). Combinations of the aforementioned are clearly also possible, e.g. an integrated model of the abdominal (or thoracic) cavity that involves (possibly many) sub-models for the bones, the different organs (as a whole or divided into sub-models for parts thereof), and/or optionally further components in that cavity, e.g. visceral deposits etc..

In other words, the anatomical structure may involve various parts that are generally adjacent (or near) to each other, but may have some degree of freedom in relative positioning, orientation and the like. It will be appreciated that this may be particularly applicable to joints and the specific example of the spine. However, the degree of freedom is not necessarily (or not necessarily only) due to a freedom of movement or flexibility of the body as such. The freedom in relative positioning, orientation and such between the parts may also arise, at least partly, due to anatomical variation between different subjects (and could also be to some extent due to possible injuries, diseases or malformations to be taken into account). Thus, the model may be a template for the general shape of the anatomy to be segmented, but may vary substantially across different subjects, or for different poses of a same subject, all of which should be, ideally, compensated for (e.g. at least implicitly) by a method in accordance with embodiments.

The connectors connecting pairs of points in different sub-models to each other (i.e. each point of the pair belonging to a different sub-model) may be line segments, e.g. in which each line segment connects a pair of points (vertices) in different sub-models to each other. It is an advantage that such line segment can be efficiently represented as a degenerate triangle (e.g. in which one of the three corners of the triangle is identical to another corner point such that the triangle reduces to an equivalent line segment). This is particularly useful for a mesh model that is based on polygonal, or solely triangular, faces, i.e. the connector can be handled in the same manner as a conventional face of the model.

Thus, the (e.g. triangular) mesh model describes different parts of the anatomical structure(s) to be segmented, by corresponding different sub-models (sub-meshes) thereof, and the spatial relationships between neighboring surfaces (sub-models) in the surface mesh model are modeled by the connectors, e.g. line segments or degenerate polygons (e.g. degenerate triangles).

Furthermore, by modeling the connectors in a uniform manner with respect to the surface meshes of the model, e.g. by using degenerate triangles as connectors in a triangular surface mesh model, the spatial relationship between different parts of the model can be easily modeled and stabilized. The number of connectors that are included to connect two adjacent sub-models can be optimized to achieve a desired degree of flexibility or relative rigidity. For example, including a higher number of such connectors will penalize large deviations between the initial model's distance and orientation of the connected parts with respect to each other and the corresponding final (optimized) model's distances and orientations. Likewise, by decreasing the number of connectors, the optimization will favor solutions in which relative positioning of the modeled parts is considered before (or more accurately, to a larger extent than) substantial deformation of the shapes of those parts. It is to be noted that the relevance of the number of connectors may be relative to the total number of vertices involved in the model (or in the connected sub-parts thereof). It will also be clear that the same effect can be achieved by assigning different weights to elements of the model, in which these weights are used in the iterative optimization procedure, e.g. to control the importance of maintaining (i.e. preferring solutions close to) the default length a connector over (substantial) deformations of modeled surfaces.

The positioning of the connectors (e.g. which specific vertices are connected) can also be used to prefer natural variation between subjects and/or degrees of freedom in movement of the involved parts. For example, connectors may, e.g. approximately, align along an axis, or may be provided in a greater density near such axis, to prefer variation between optimized models (i.e. over possible segmentation results) that corresponds to a hinging movement around that axis. Thus, movement of joints (but not necessarily limited to hinge joints) can be taken into account by purposeful selection and/or tuning of the connectors included in the model.

The method further comprises determining 12 (e.g. detecting and locating) at least three landmark features in the image, e.g. landmark features of anatomy in the neighborhood of the anatomical structure to be segmented that can be easily recognized by an algorithm. Many examples of such landmark features and corresponding detection algorithms are known in the art. These at least three landmark features may be located in surrounding anatomical structures, i.e. in the vicinity of the anatomical structure. Alternatively or additionally, the (or at least one of the) landmark features may be located in or on the anatomical structure of interest.

The method thus obtains at least three landmarks from (e.g.) surrounding anatomical structures in the vicinity of the anatomical structure of interest and/or on/within the anatomical structure of interest. For each obtained landmark a spring point in the at least two body parts is identified, e.g. a vertex of the collective mesh formed by the sub-models, and each of the spatial relationships between each of the at least three landmarks and its respective identified spring point is modeled using a respective spring. Furthermore, more than one spring can be modeled for a single landmark, e.g. the landmark feature may be connected by at least one spring to one or more points of the mesh model.

For example, the mesh model may be stored as a data structure, e.g. may be received from a data storage device, in which this data structure, in addition to values defining the mesh model (e.g. vertices, edges, faces), comprises annotation information to associate one or more points of the model, e.g. vertices, with a specific landmark feature to be detected in use of the model in a segmentation method as described. This annotation information may be as simple as a value or pointer associated with a vertex (or other point defined by the model, e.g. a face centroid or volume centroid) to indicate the (type of) landmark feature to which it is intended to be connected, but may also comprise additional information of the spring model, e.g. not only identifying the landmark feature to which the point is to be connected, but also (for example) a spring constant and/or a length of the modeled spring when unloaded.

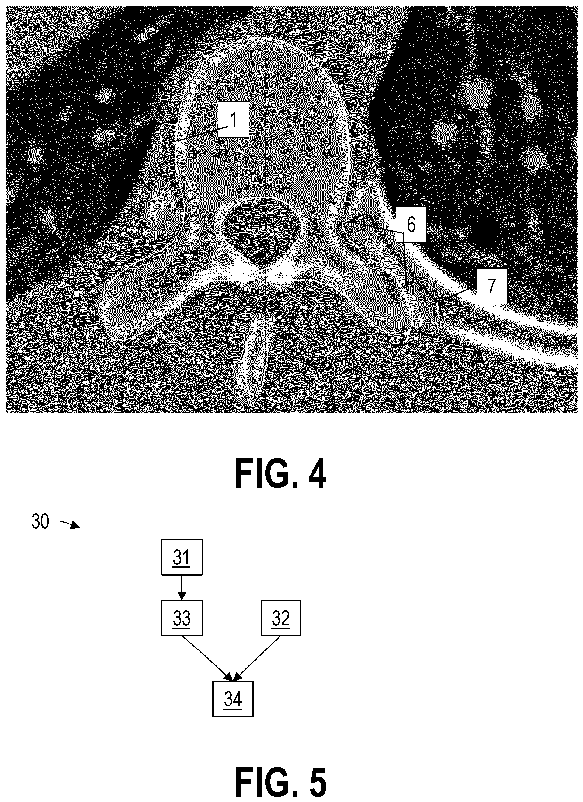

The method may thus model spring forces (in the optimization discussed hereinbelow) acting between landmark image features and points of the surface mesh model 1. For example, as shown in FIG 4, which further elaborates the example of FIG 2 and 3, these spring forces 6 may act between predetermined points of the mesh and the detected landmark features, such as, in this example, a point on a rib centerline 7, which can advantageously be detected efficiently and in a robust manner.

The landmarks that are selected for detection, e.g. by purposefully designing the detection algorithm or choosing appropriate parameters thereof, may be positioned relatively close to the model points to which they are connected by such spring forces, e.g. as illustrated in FIG 3, but embodiments are not necessarily limited thereto. For example, configurations of more distant landmarks may be used alternatively or in combination with landmarks that are positioned relatively close. The at least three landmarks may be spread out in different directions, which contributes to a fast and effective alignment (i.e. orientation; but simultaneously also a correct positioning) of the segmentation model with respect to the anatomical structures represented in the image.

The landmark features may also comprise one or more landmark features that are located inside or on the surface mesh (when correctly aligned and deformed by the method in accordance with embodiments). It will be appreciated that a method in accordance with embodiments provides considerate freedom in selecting landmark features to be used, e.g. based on the ease by which these can be detected automatically (or with limited interaction of a user) and/or by a good specificity of the algorithm to the specific anatomical feature to be detected in the image.

Furthermore, by detecting different landmarks that are in the following optimization step connected by modeled spring forces to respective points on the different sub-models, an expected flexibility of the anatomical structure, or variation thereof between subjects, can be compensated easily. For example, for each sub-model (e.g. vertebral body in the example discussed hereinabove) at least three landmark points may be used to position the sub-model at least approximately in a correct configuration, even though the relative position and/or orientation of these sub-models can vary substantially between different images (once optimized as described hereinbelow). These landmarks may be distributed at about a same distance from the sub-model, such that balancing the pulling forces centers the sub-model in at least an approximately correct position. Note that the different landmarks may connect to different points on the sub-model to obtain, also, an at least approximately correct orientation. However, the landmarks need not be distributed at equal distances. Different spring forces may be associated with different spring constants and/or unloaded lengths to tune the relative strengths of these pulling (or pushing) forces. Likewise, the landmarks may be distributed approximately uniformly in different directions, but, again, this is not necessary, in so far that the landmarks are not colinear (and preferably also not coplanar);

Many different approaches are known in the art for the automatic (or semi-automatic) localization of anatomical landmarks in images. For example, a probability map (or pseudo-probability map, i.e. a map that is not necessarily normalized to the [0,1] probability range but is nonetheless indicative of, e.g. proportional or inversely proportional to, a probability) for finding a specific landmark across the image may be generated using e.g. random forests, decision trees, deep convolutional networks and/or the discriminative generalized Hough transform.

As an example of such localizer approach, determining 12 (e.g. detecting) the at least three landmark features in the image may comprise applying a convolutional neural network or other suitable neural network, e.g. a deep neural network, to the image (e.g. providing the image and/or data derived from the image as input to the network) and/or applying a predictive model constructed by an ensemble learning method (or equivalently, a machine-learning approach trained by taking a suitable cross-validation or another overfitting preventative measure into account), e.g. a random forest approach. For example, the (convolutional) neural network may be trained to detect specific anatomical landmark features in the image, i.e. the at least three landmark features. It is to be noted that a good accuracy of detecting relevant anatomical features can be achieved by a properly trained neural network, e.g. convolutional network, or a predictive model trained by a random forest approach, but that a method in accordance with embodiments may nonetheless be considerably robust against imprecise localization of the feature. For example, insofar that the detected feature is localized in the general vicinity of the target feature (i.e. nearby), the method in accordance with embodiments of the present invention may still segment the anatomical feature without (substantial) loss of quality and/or efficiency.

As an example of such localizer approach, e.g. which may include random forests, decision trees, and/or similar ensemble learning and/or predictive modeling techniques, a landmark-specific regression tree ensemble may be trained to generate a plurality of hypotheses of possible positions of a specific landmark (and, thus, for each landmark by a plurality of such regression tree ensemble models). For example, for each position in the image (voxel coordinates), a probability (or value representative thereof) may be determined that indicates how likely it is that the landmark feature is found at that position. Then, a plurality of (local) maxima may be determined from such map to obtain a plurality of candidate positions.

The input provided to these ensemble models (or other localizer algorithm) may be based on low-level image feature extraction algorithms, e.g. to detect morphological features, gradients, edges, textures, etc. In other words, candidate positions may be predicted by the trained ensemble based on local image content and context. In this example, the position of each landmark is considered in isolation from the other landmarks, such that confusion is possible (e.g. a same position may be included in the list of candidate positions for more than one of the landmarks). Thus, for each image coordinate x, a vector of local image features ***f***(***x***) can be determined, and provided as input to an ensemble of regression trees. Each tree (and the ensemble collectively, e.g. by averaging) assigns an output value indicative of the probability of locating the landmark feature at the position x based on the feature vector ***f**(**x**)*, such that a (pseudo)probability map (one for each landmark feature to be detected) can be generated over the entire image domain. From this, a number of hypothesized positions are extracted for each of the landmark features of interest, e.g. by selecting local maxima of the (pseudo)probability map, e.g. using a non-maximum suppression (NMS) algorithm.

Determining 12 the landmarks may comprise detecting a feature vector of local image features for each image coordinate to be used as input to the localizer algorithm, e.g. a neural network or predictive model obtained by an ensemble learning technique.

Many suitable approaches to construct the primitive local image feature vector f and/or to diversify the trees of the ensemble are known in the art. For example, the features may be as simple as intensity (pixel value) differences of the voxel at the target coordinate x (for which the feature vector is calculated) and another image point nearby. In the so-called Binary Robust Independent Elementary Features approach, a random sampling mask is generated for each tree of the forest, that defines the relative positions of the nearby points (e.g. within a predetermined neighborhood radius R) to sample to construct such feature vector.

Regression trees may be trained on a training set of positive and negative examples of the landmark feature of interest, using a method known in the art, e.g. taking the feature vector for points under evaluation as input. It is an advantage of a tree/forest-based approach that training can be implemented efficiently on standard hardware, e.g. is relatively low in demand on computational resources, and, perhaps even more importantly, the trained ensemble can be evaluated very quickly and efficiently in use of the segmentation method in accordance with embodiments.

A spatial regularizer may be applied after the localizer step to select a globally optimal configuration over all landmarks, e.g. with the largest joint posterior probability. This spatial regularizer may, for example, comprise a conditional random field (CRF) approach. Whereas a localizer (e.g. neural network, ensemble model, ...) may be used to detect each landmark separately, e.g. to form hypotheses of possible locations of each landmark, the spatial regularizer may combine this information to find a likely combination, e.g. a constellation, of the landmarks. For example, if for each landmark n possible locations are determined in the first localizer step, the regularizer (e.g. a CRF) may select from the *n^{N}* possible combinations the most likely configuration (where N refers to the number of different landmarks to be detected). If a landmark might be excluded from the field of view of a specific image, i.e. might be missing from the available image information, an additional possibility may be available for selection to form a combination to be evaluated by the regularizer algorithm, e.g. a missing state, such that the total number of possible combinations becomes (*n*+*1)^{N}.* The skilled person will understand that this is only an example, and the number of hypotheses for the position of each landmark may vary for the different landmarks (e.g. depending on how easy it is to detect the target landmark unambiguously), and/or the 'missing' state may be available for selection only for some (or none of the) landmarks (e.g. which are near the edges of the image volume for a typical application as intended).

In the CRF approach, an energy function (not to be confused with the objective function referred to further herein below) may be associated with each combination of landmark features (by selecting one of the hypotheses for each landmark, optionally including the possibility of selecting the 'missing' state for a landmark), in which this energy function is inversely related to the posterior probability of the combination (i.e. a low energy representing a high posterior probability). The energy function can be constructed by a weighted sum of a pool of potential functions, in which the weights can be trained. The potential functions can comprise functions of different arity (e.g. involving unary functions that only consider features in isolation, binary functions that consider pairs of features from the combination vector, trinary functions that consider triplets, etc.). For example, a unary potential function may be calculated for each element of a candidate set, a binary potential function may be calculated for each possible pair of two elements of a candidate set, etc. Furthermore, the pool of potential functions may comprise different types of potentials of the same arity, e.g. expressing an energy contribution due to a distance between a pair of landmark features, another expressing an energy contribution due to the angle of a pair of features with respect to a reference axis, another expressing a binary vector potential (using a multivariate distribution with a mean and covariance matrix to calculate a value for the difference vector between a pair of features), etc.

A default or "missing" potential value may be assigned to replace the potential function value if the potential function cannot be evaluated (e.g. requires a landmark position for evaluation that has been assigned to the "missing" state in the specific combination for which the energy value is being calculated). Such (optional) missing potential values can be trained as further weights of the algorithm.

For example, a unary energy potential may include a sum of terms -log(*uᵢ*) over the selected candidate landmark features of a combination for which the energy is being calculated, in which *uᵢ* represents the output values of the localizer for a corresponding candidate landmark feature, e.g. the (pseudo)probability obtained by the random forest. Likewise, a binary energy potential may calculate an energy term -log(*uᵢⱼ*) associated with a probability density uᵢⱼ for the pair of candidate features i,j.

This probability density may, for example, be a normal distribution density value for the distance between two landmarks, in which the normal distribution parameters (mean and variance) can be trained or simply determined by the empirical corresponding parameters on the training data. Clearly, the mean and variance parameters may be determined for each specific pair of landmarks, e.g. a lateral processus tip for a specific vertebral body and a dorsal processus tip for another vertebral body (to name only one specific pair of all the combinations of landmarks). For the same pair, other binary potentials may be considered as well, such as a potential taking the angle of the difference vector with respect to a first reference axis (e.g. the longitudinal imaging axis), the same for another reference axis (e.g. the lateral imaging axis), and/or the same for a third reference axis (e.g. the frontal axis), and/or a vector-based potential (e.g. *uᵢⱼ* = (***zᵢⱼ**-**µ***)^{T}∑(***zᵢⱼ**-**µ***), where ***zᵢⱼ*** = ***xᵢ-xⱼ***).

Details of such approach for determining the landmark features, as briefly outlined hereinabove, may be found in, for example, Mader et al, "Detection and localization of spatially correlated point landmarks in medical images using an automatically learned conditional random field", Computer Vision and Image Understanding 176-177, pp. 45-53. For segmenting the spine (or part thereof), the landmarks for which such method, using a forest ensemble and a CRF (without limitation thereto), is trained and optimized may include, for example, the barycenter of the lateral process tip(s), of the upper and lower vertebral body plate(s), and/or other salient landmarks of the vertebrae and/or nearby anatomy. Embodiments may equally relate to obvious alternatives to the approach in this reference, such as using convolutional networks instead of forest ensemble methods.

As another example, determining the landmark features may comprise a delineation of the rib centerlines and selecting (a) point(s) on the medial end of these rib centerlines as the landmark features (e.g. illustrated in FIG 4). Details of an illustrative method to detect such rib-line features can be found in Lenga et al, "Deep Learning Based Rib Centerline Extraction and Labeling", arXiv preprint arXiv: 1809.07082 or arXiv:1809.07082v2, doi:10.1007/978-3-030-11166-3_9. In this illustrative approach, a deep learning-based rib detection algorithm may be combined with a dedicated centerline extraction algorithm applied to the detection result. It is an advantage that this achieves a fast, robust and accurate rib centerline extraction and labeling from CT volumes. It will be clear that the same or a similar approach can be applied to different kinds of bones, and is not necessarily limited to the CT modality. The deep learning-based rib detection algorithm may comprise a fully convolutional neural network (FCNN) to generate a probability map for detecting the first rib pair, the twelfth rib pair, and the collection of all intermediate ribs (or another selection of ribs of interest). In a second stage, the centerline extraction algorithm may then be applied to the thereby obtained multi-label probability map. Finally, the specific ribs may be identified by counting and sorting the detected rib centerlines. An easily identifiable and/or robust point (or points) may then be selected on the rib centerlines as the landmark feature(s), e.g. end point(s), bending points, etc.

The method also comprises adapting 13 the mesh model by iteratively repositioning vertices of the mesh model to optimize an objective function, e.g. minimizing an energy function.

The objective function comprises at least a first part, e.g. term, representative of a correspondence between the surface mesh model and the anatomical structure as represented in the image. Thus, optimizing this term morphs (deforms) surfaces of the mesh model to correspond better to surfaces of the anatomical structure as represented by the image.

For example, the objective function may be, or may be equivalent to, an energy function that is minimized by the iterative optimization, in which the first part may comprise an external energy of the surface mesh model. The minimization of this external energy drives a movement of the vertices and faces (e.g. triangles formed by edges connecting the vertices) to corresponding positions of the anatomical structure in the image data. The corresponding positions may be based on an explicit pattern detection in the image and/or by using implicit image features, such as edge detection, image gradients, texture detection, and/or other such methods as known in the art. Alternative approaches, as known in the art, to formulate an external energy to drive a mesh model toward corresponding image features are not necessarily excluded.

The objective function also comprises at least a second part, e.g. term, for (preferentially) preserving the shape of the surface mesh model and to maintain the spacing between the sub-models as represented by the connectors. It will be understood that these two effects can be achieved by a uniform treatment of the vertices forming faces of the sub-model meshes and the vertices forming connectors, e.g. degenerate polygons representing line segments. In other words, preserving the shape of the (global) surface mesh model also preserves the lengths of the connectors. However, as will be understood by the skilled person, the first part and the second part may represent (at least to some extent and/or in some optimization steps) opposite forces, such that morphing the model to correspond better to the depicted structure and preserving the shape of the model, including the distance imposed by the connectors, are only executed by the iterative optimization until a balance between these goals is reached.

For example, the objective function may be, or may be equivalent to, an energy function that is minimized by the iterative optimization, in which the second part may comprise an internal energy of the surface mesh model and of the connectors. For example, the internal energy may penalize large deviations of the deformed mesh model's edge lengths, face areas and/or volumes enclosed by the faces from the corresponding edge lengths, face areas and/or volumes in the original (undeformed) mesh model. Particularly, the third part may comprise terms for penalizing large deviations from the undeformed lengths of the connectors.

The objective function also comprises at least a third part, e.g. term, for driving distances between predetermined points of the surface mesh model to the detected landmark features toward zero or to other predetermined values by simulating a spring force between each of the detected landmark features and at least one of the predetermined points. In other words, a plurality of distances, each distance being between a predetermined point, e.g. a vertex and/or a face centroid and/or a volume centroid (of a volume enclosed by mesh faces, e.g. of the volume of one of said sub-models), and one of the detected landmark features, is driven toward a target distance, which may be zero or a different value (not necessarily, but possibly, the same for all of said distances). Again, it is noted that this force for driving these distances to a goal distance can counteract the first and/or second term, such that the optimization achieves a balance between these three terms without necessarily reaching the optimum of any of the individual goals of these three parts individually. The skilled person will understand that this is as intended in an optimization in which a plurality of goals are balanced against each other.

For example, the objective function may be, or may be equivalent to, an energy function that is minimized by the iterative optimization, in which the third part may comprise an energy term of a spring model connecting the landmark feature with a point of the model, e.g. a vertex, e.g. of the form k(**x-y**)², in which k is a constant (possibly different for each connector), x is a vector representing the landmark feature position and y is a vector representing the point in the model, e.g. a vertex of the model. The quadratic function can be replaced by another suitable form for expressing a deviation, e.g. an absolute value (length of the difference vector). The quadratic function may be interpreted as a matrix product, i.e. (x-**y**)^{T}(**x-y**), in which the vectors are represented as column matrices and T indicates matrix transposition.

An example of a generic construction of the objective function may be found in US 2017/0084023, including details of an example of modeling the spring forces (third part), the regularizing second part, and an illustrative approach of driving the segmentation model to the shape of the depicted anatomical structure in the image (first part).

It will be understood that an optimization can equivalently be formulated as a maximization of an objective function, or a minimization of a cost function (e.g. energy function). For the purposes of the present disclosure, such differences are considered irrelevant, and embodiments encompass all such possible variations. Where reference is made to different parts of the objective function, it will be understood by the skilled person how the stated part contributes to the solution of the segmentation task, and thus in which sense (e.g. numeric sign) it should be optimized in the iterative adaptation of the mesh model. While the different parts can be different terms in a sum forming the cost function, it will be understood that the parts can be formulated differently to achieve the same effect, e.g. as multiplicative factors in a product, or can be mixed in with other parts, e.g. a sum of terms, in which each term comprises a first multiplicative factor associated with a first of such parts of the function and a second multiplicative factor associated with another of such parts of the function. It will also be understood that the relative importance of these three parts may be weighed against each other, e.g. by including suitable weight factors.

It will also be understood that more complex approaches (compared to a simple summation or product) to include all three parts in the objective function may be considered. For example, one (or more) of said parts of the function can be considered as a constraint, e.g. may be included in the function in the form of a term associated with one or more Lagrange multipliers, and/or the procedure may impose a hard limit on deviations for any of the three parts mentioned. In other words, the three parts are not necessarily clearly algebraically separable.

Furthermore, the objective function can be split in two or three (or more) separate functions. For example, each iteration of the iterative procedure may involve taking an optimization step to optimize each of the separate objective functions subsequently (even though a uniform optimization in which a single cost function that unites these three parts is optimized might be preferable for the same of consistency of the results).

Thus, the iterative procedure may reposition vertices of the deformable surface mesh model to reduce model energies for the vertices, for the connectors, and for the springs. The objective function may represent an energy to be minimized by the optimization, in which this energy increases for larger deformations of the surface mesh model and of the connectors with respect to their undeformed configuration in accordance with the initial surface mesh model due to the second part of the function, increases for larger deviations of the surface mesh model from the anatomical structure as represented in the image due to the first part, and increases for larger deviations of the lengths of springs connecting the landmark features with their corresponding points in the model from their unloaded length, e.g. zero or said predetermined value(s), due to the third part of the function.

It is an advantage of such approach that the anatomical structure can be automatically (or semi-automatically, if so desired) segmented in the image, e.g. a CT or MRI image, using a simple approach. Particularly, the number of required separate processing steps can be kept low and/or the number of iterations of the optimization can be reduced. Since the optimization will evolve toward a good solution of the segmentation process regardless of an initial relative orientation and positioning of the model, it is not required to perform an initial positioning, orientation and/or coarse alignment (and/or coarser deformation or affine transformation) of the model before finetuning the positions of the vertices in accordance with the method as described. Thus, the segmentation can be executed as substantially a single-step adaptation (model optimization/fitting) method, or, when also taking the step of detecting landmark features into account, a two-step method, in which only one step may need a substantial number of iterations, e.g. only one computationally expensive step.

The method in accordance with embodiments may be particularly suitable for segmenting the spine or a part thereof (e.g. a section of the spine, such as the lumbar spine, the thoracic spine or the cervical spine, or any subsection thereof). The image may thus be a 3D CT image of the spine, or another suitable image modality, e.g. an MRI image. The sub-models may each consist of a vertebra, e.g. a triangular (or triangulated) surface mesh of the vertebra. The connectors may consist of or comprise degenerated triangles that connect neighboring vertebral body surfaces to each other. The third part of the objective function for optimization, e.g. the spring forces, may model springs that connect predetermined model surface points to detected landmarks in the image volume. The spring forces pull the model toward the correct approximative (coarse) position and orientation with respect to the image, e.g. establish a suitable position and orientation regardless of the initial pose of the model. It can be seen that this is particularly useful in view of the flexibility of the spine and possible deviations from a normal spinal alignment due to injury or disease, e.g. spinal disc herniation. The connectors between vertebral bodies stabilize the model during the optimization process and allow vertebrae to move with respect to each other, e.g. at least to a certain degree. Furthermore, intersection of neighboring meshes (representing adjacent vertebrae) can be prevented by these connectors, since the objective function (particularly the second part thereof) attempts to maintain the length of these connectors, i.e. penalizes large deviations from the initial distance imposed by these connectors. It is particularly advantageous that such self-intersection of the model does not need to be managed by dedicated sanity checks and/or specific algorithms for this purpose.

Not only is a method in accordance with embodiments particularly suitable for a robust, efficient and reliable model-based segmentation of the spine, such model-based segmentation may offer additional advantages. By providing a fitted mesh model of the spine (or part thereof) as output, which comprises separate meshes for each of the modeled vertebrae, diagnostically relevant parameters can be readily determined from the output. For example, measurements of each vertebral body can be easily and automatically computed from the fitted mesh model, such as surface areas of facets, volume and/or linear (or curvilinear) dimensions, such as anterior, central and/or posterior height of the vertebral body, upper and/or lower end-plate width and/or depth, spinal canal width and/or depth, transverse and/or spinal processus length and/or angle, and/or pedicle height, width and/or angle. Measurements expressing the relation between (e.g. adjacent) vertebrae can also be determined, such as intervertebral disc height, lordotic angle, and/or lateral and/or anteroposterior displacements, e.g. as possibly indicative of dislocations or hernations.

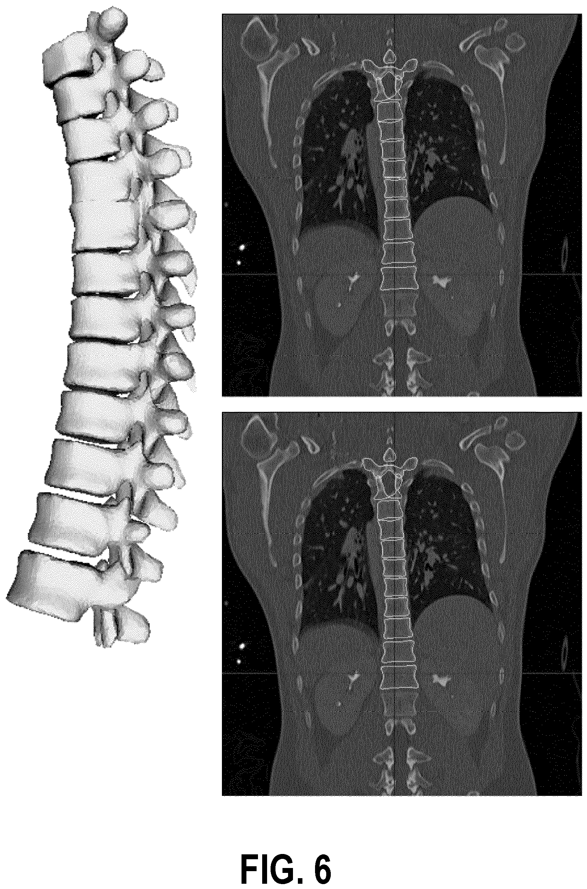

To illustrate the results obtainable by a method in accordance with embodiments of the present invention, FIG 6 shows a spine model after adaptation, i.e. an illustrative result of a segmentation method in accordance with embodiments of the present invention.

In a second aspect, the present invention relates to an image processing device for segmenting an anatomical structure represented in an image. The anatomical structure comprises at least two non-overlapping parts, e.g. disjoint parts.

FIG 5 shows an illustrative device 30 in accordance with embodiments of the present invention. The device may comprise a processor, e.g. a computer system, configured with typical support hardware, e.g. a memory, input/output interfaces, a user interface, and the like. Such processor, e.g. computer, may comprise computer-readable instructions, e.g. stored in a memory, to execute a method in accordance with embodiments. The processor may be a generic processor, e.g. a microprocessor as typically included in a computer system (which may also include a plurality of processors, a cloud computing platform, a computing cluster, and the like), but may also comprise hardware that is specifically designed or configured for the stated purpose, e.g. an application specific integrated circuit (ASIC), a field-programmable gate array (FPGA), etc.

The device 30 comprises an input 31 for receiving the image, e.g. a CT image, an MRI image, an ultrasound image, or another type of medical (or veterinary) image.

The device 30 also comprises a data storage 32, e.g. a memory, for storing a surface mesh model of the anatomical structure to be segmented, in which this surface mesh model comprises a plurality of sub-models for respectively representing each of the at least two non-overlapping parts, and a plurality of connectors, in which each connector connects a point in a sub-model to another point in another sub-model of the plurality of sub-models. The device may also comprise a further input for receiving the surface mesh model (e.g. to be at least transiently stored in the data storage for use in processing).

The device 30 comprises an anatomical landmark detector 32 (e.g. implemented by the processor) to determine at least three anatomical landmark features in the image.

The device further comprises an optimizer 34 (e.g. implemented by the processor) for adapting the surface mesh model by iteratively repositioning vertices of the surface mesh model to optimize an objective function. This objective function comprises at least:
a first part representative of a correspondence between the surface mesh model and the anatomical structure represented in the image,
a second part for preserving the shape of the surface mesh model and to maintain spacing between said sub-models as represented by said connectors, and
a third part for driving distances between predetermined points of the surface mesh model and the detected landmark features toward zero or to other predetermined values by simulating a spring force between each of said detected landmark features and at least one of said predetermined points.

Other features, or details of the features described hereinabove, of a device in accordance with embodiments of the present invention shall be clear in view of the description provided hereinabove relating to a method in accordance with embodiments of the present invention.

In a third aspect, the present invention relates to a computer-program product comprising computer-executable instructions, which, when executed on a programmable device, performs a method in accordance with embodiments of the first aspect of the present invention.

In a fourth aspect, the present invention relates to an image processing workstation to process medical (or veterinary) images, comprising a device in accordance with embodiments of the second aspect of the present invention. For example, the image processing workstation may be a workstation for processing, and/or viewing CT or MRI images.

In a fifth aspect, the present invention relates to a surface mesh model, e.g. stored in a data memory, stored on a data carrier or transmitted by a data communication network, of an anatomical structure to be segmented for use in a method in accordance with embodiments of the first aspect of the present invention. The surface mesh model comprises a plurality of sub-models for respectively representing at least two non-overlapping parts of the anatomical structure, and a plurality of connectors, in which each connector connects a point in a sub-model to another point in another sub-model of the plurality of sub-models. The surface mesh model may comprise a triangular mesh, in which degenerate triangles represent the connectors. The surface mesh model further comprises annotation information associated with predetermined points of the surface mesh model, in which the annotation information defines for each of the annotated points one or more predetermined landmark features to be detected in an image, such that the method can simulate a spring force between the landmark feature and the associated point when adapting the surface model to segment an image.

Notwithstanding the exemplary embodiments described herein, is the present invention only limited by the attached claims. The attached claims are hereby explicitly incorporated in this detailed description, in which each claim, and each combination of claims as allowed for by the dependency structure defined by the claims, forms a separate embodiment of the present invention.

The word "comprise," as used in the claims, is not limited to the features, elements or steps as described thereafter, and does not exclude additional features, elements or steps. This therefore specifies the presence of the mentioned features without excluding a further presence or addition of one or more features.

In this detailed description, various specific details are presented. Embodiments of the present invention can be carried out without these specific details. Furthermore, well-known features, elements and/or steps are not necessarily described in detail for the sake of clarity and conciseness of the present disclosure.

## Claims

1. A method for segmenting an anatomical structure represented in an image, wherein said anatomical structure comprises at least two non-overlapping parts, the method comprising:
obtaining (11) a surface mesh model of the anatomical structure to be segmented, wherein said surface mesh model comprises a plurality of sub-models for respectively representing each of the at least two non-overlapping parts, and a plurality of connectors, in which each connector connects a point in a sub-model to another point in another sub-model of the plurality of sub-models,
determining (12) at least three anatomical landmark features in the image, and adapting (13) the surface mesh model by iteratively repositioning vertices of the surface mesh model to optimize an objective function, wherein said objective function comprises at least:
a first part representative of a correspondence between the surface mesh model and the anatomical structure represented in the image,
a second part for preserving the shape of the surface mesh model and to maintain spacing between said sub-models as represented by said connectors, and
a third part for driving distances between predetermined points of the surface mesh model and the detected landmark features toward zero or to other predetermined values by simulating a spring force between each of said detected landmark features and at least one of said predetermined points.

2. The method of claim 1, wherein said surface mesh model consists of vertices, edges connecting said vertices, and triangular faces formed by said edges.

3. The method of any of the previous claims, wherein said plurality of connectors comprise line segments represented as degenerate triangular faces of the surface mesh model.

4. The method of any of the previous claims, wherein determining (12) the at least three anatomical landmark features in the image comprises evaluating a trained predictive model for each of the anatomical landmark features.

5. The method of claim 4, wherein said trained predictive model comprises a neural network and/or a tree forest model.

6. The method of claim 4 or claim 5, wherein the trained predictive models are applied to obtain a list of candidate locations of each landmark feature to be detected, and wherein determining (12) the at least three anatomical landmarks further comprising selecting an optimal constellation of the anatomical landmark features by evaluating all combinations of the candidate locations of each landmark.

7. The method of claim 6, wherein evaluating all of said combinations to select the optimal constellation comprises applying a conditional random field algorithm.

8. The method of any of the previous claims, wherein determining (12) the at least three anatomical landmark features in the image comprises detecting a centerline of one or more bones in the image, and selecting predetermined points on the or each centerline as one or more of said landmark features.

9. The method of claim 8, wherein said one or more bones comprise one or more ribs.

10. The method of any of the previous claims, wherein said anatomical structure comprises a spine or part thereof, and the at least two non-overlapping parts comprise at least two separate parts corresponding to different vertebrae, wherein each of said sub-models comprises a mesh model of a corresponding vertebral body.

11. The method of claim 10, wherein said anatomical landmark features comprises points on one or more rib centerlines, and/or centers of process tips of the vertebral bodies and/or of the upper and/or lower vertebral body plates.

12. The method of claim 11, wherein said third part of the objective function comprises, for each vertebral sub-model, modeled spring forces connecting points on that vertebral sub-model to at least two landmarks on rib centerlines of two opposite ribs adjacent to the vertebral body.

13. An image processing device (30) for segmenting an anatomical structure represented in an image, in which the anatomical structure comprises at least two no-overlapping parts, the device comprising:
an input (31) for receiving said image,
a data storage (32) for storing a surface mesh model of the anatomical structure to be segmented, in which said surface mesh model comprises a plurality of sub-models for respectively representing each of the at least two non-overlapping parts, and a plurality of connectors, in which each connector connects a point in a sub-model to another point in another sub-model of the plurality of sub-models,
an anatomical landmark detector (32) to determine at least three anatomical landmark features in the image, and
an optimizer (34) for adapting the surface mesh model by iteratively repositioning vertices of the surface mesh model to optimize an objective function,
wherein said objective function comprises at least:
a first part representative of a correspondence between the surface mesh model and the anatomical structure represented in the image,
a second part for preserving the shape of the surface mesh model and to maintain spacing between said sub-models as represented by said connectors, and
a third part for driving distances between predetermined points of the surface mesh model and the detected landmark features toward zero or to other predetermined values by simulating a spring force between each of said detected landmark features and at least one of said predetermined points.

14. A computer-program product comprising computer-executable instructions, which, when executed on a programmable device, performs the method in accordance with any of the claims 1 to 12.

15. A surface mesh model of an anatomical structure to be segmented for use in a method in accordance with any of the claims 1 to 12, wherein said surface mesh model comprises a plurality of sub-models for respectively representing at least two non-overlapping parts of the anatomical structure, and a plurality of connectors, in which each connector connects a point in a sub-model to another point in another sub-model of the plurality of sub-models, wherein said surface mesh model comprises annotation information associated with predetermined points of the surface mesh model, such that said annotation information defines, for each of the annotated points, one or more predetermined landmark features to be detected in an image to simulate, in said method, a spring force between the landmark feature and the associated point when adapting the surface model to segment an image.
